# EUROPEAN PATENT SPECIFICATION

(11) **EP 1 340 307 B1**
(45) Date of publication and mention of the grant of the patent: **09.01.2008**
(21) Application number: 01993053.6
(22) Date of filing: 06.11.2001
(51) Int. Cl.: H02K 7/102, H02K 7/108, H02K 7/112, H02P 5/52, H02P 7/29, H02P 21/00

(54) **CLOSED LOOP CLUTCH/BRAKE CONTROL**
KUPPLUNGS-/BREMSENREGELUNG MIT GESCHLOSSENER SCHLEIFE
COMMANDE D'EMBRAYAGE/DE FREIN EN BOUCLE FERMEE

(30) Priority: 06.11.2000 US 246176 P
(43) Date of publication of application: 03.09.2003
(73) Proprietor: AMERICAN PRECISION INDUSTRIES INC., Amherst, NY 14228 (US)
(72) Inventor: BUZZARD, Brian, Lancaster, NY 14086 (US)
(74) Representative: Moir, Michael Christopher
(86) International application number: PCT/US2001/043785
(87) International publication number: WO 2002/037646

(56) References cited:
- EP-A- 0 810 143
- DE-A1- 3 801 647
- US-A- 4 284 942
- US-A- 4 561 530
- US-A- 4 568 863
- US-A- 4 745 984
- US-A- 4 912 386
- US-A- 5 094 333

## Description

### CROSS-REFERENCE TO RELATED APPLICATIONS

This application claims the benefit of U.S. Provisional Patent Application Serial No. 60/246,176, filed November 6, 2000 (Attorney Docket No. 89664.140100).

### TECHNICAL FIELD

This invention relates in general to control systems for automated products, and in particular to a closed loop control system for electromagnetic friction device such as a clutch or brake.

### BACKGROUND OF INVENTION

A typical closed control system has a device to be controlled, a motor to provide force, an amplifier to drive the motor, and a measuring device to verify the condition of the controlled device. In an open loop system, all of the above parts need to be present except the measuring device. In this case, knowledge of both the controlled device and the force produced must exist in order for the system to have some predictability.

For example, a common open loop system is a stepper motor system, where an amplifier provides a controlled stream of pulses to the motor, which is then expected to make a rotational movement proportional to the number of pulses supplied. There is no verification that the motor truly made all of the required steps, but, by knowing the characteristics of the driven device and the forces supplied by the motor, the system will in fact perform the required movements with great repeatability.

The major limiting factor for such a system is the inability to change the controlled device's characteristics without also changing the force-producing device and/or the desired control features of the total system Due to these limitations, closed loop control is used when the controlled device's characteristics may change or where the system needs to have variable features depending on the function to be performed. In this case, the loop is closed with a measuring device, the output of which is typically compared with the controlling reference. The difference between the control reference and the feedback is called the error signal.

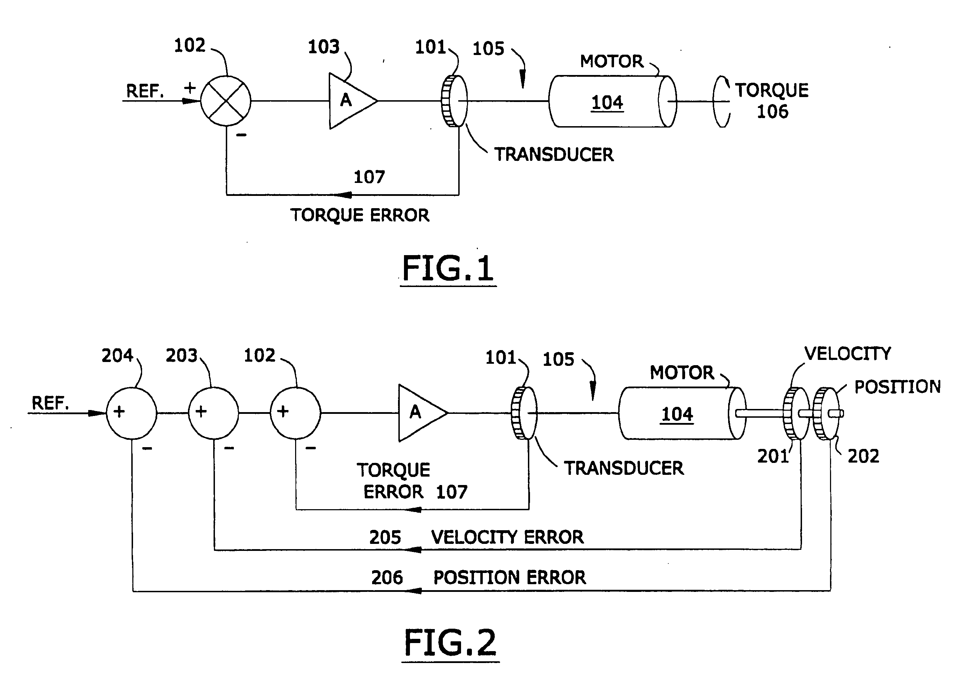

One of the simplest control systems applicable to the above system is a torque controller **100** shown in **Figure 1.** In this case, the required torque signal would be supplied and the amplifier 103 would produce a current **105** to the motor **104**, which in turn produces torque **106**. A simple feedback device in this system would be a current transducer **101** in the amplifier output. This current signal **107** is differenced with the reference signal **102** and the amplifier **103** will continue to produce additional current until the feedback signal is of equal value to the reference.

A potential problem in this system is the required error signal to maintain the output current that is related to torque. This residual is usually reduced to zero by incorporating an error integrator at the output of the error-summing amplifier. A second source of error lies in the false assumption that the relationship between current and torque will always be linear. Using a torque transducer to provide the torque feedback signal can compensate for this error. An important point to remember in this example is that the accuracy of the feedback element is the controlling factor in the system accuracy.

A basic torque system, can be expanded to perform additional functions. A second control loop may be added to control velocity and a third loop to control position, as shown in **Figure 2.**

The addition of the second loop requires the addition of a velocity transducer **201** to provide the feedback signal **205**. Its function is the same as the torque loop and it has the same effect on the system performance. This signal is then differenced with a reference signal **203**. The accuracy of the system for velocity control is only as accurate as the velocity feedback device. This control system has broad application as would be appreciated by those of skill in the art, especially those that require conditioned velocity output.

To expand further on closed loop control capability, one can add an additional loop; this would typically be considered the position loop. Again, as with the other two, to make a closed loop system there must be a position transducer **202** provided to supply position-sensing information **206.** This signal is then differenced with a reference signal **204.** And, as indicated earlier, the accuracy of the transducer is the determining factor in the system accuracy.

Up to this point, the concepts have been based on linear and continuous systems. The concept of system accuracy has been the predominant system focus. A second, and equally important, feature of closed loop systems is dynamic performance. For this analysis, both accuracy and speed are very important. In the feedback loop, the devices supplying the signals require a speed equal to or greater than the desired system speed. The control system response is typically controlled by increasing the gains in the amplifier section.

The problem that results from increasing gains is that system stability will decrease. To compensate for this, some or all the loops, including the feedback loops, are modified to include signal-conditioning circuits. The addition of these tuning circuits makes finding the optimal setup very difficult. Also, the required tuning components may not be in the range required for any particular system design; therefore, setup may require component changes. All of these factors, along with the availability of digital computers and digital signal processors, have changed the method of implementing control systems.

All of the gains, summations, and signal conditioning can be performed in a computer. The basic concepts and theory that were applicable in the linear system are still applicable in the digital system The hardware gains and compensation circuits are now replaced with registers. Obvious advantages include the rapid change in system parameters and essentially infinite ranges. The use of registers has also allowed the recipe loading of exact parameters for different system performances. Concerning the feedback loops, this change has increased the attractiveness of digital feedback devices that directly interface to the computer. However, the same constraints that applied to the linear designs still apply in the digital design-the system accuracy and speed are only as good as the feedback devices.

Nonetheless, there is an exception to this statement, and it deals with our ability to linearize the feedback devices. This can be done by making corrections in the feedback signal, based on our knowledge that errors occur at given conditions. Signal correction requires knowledge of the feedback device's nonlinearities at all conditions of operation. Once known, a new parameter for the feedback device repeatability-becomes important. As with many devices, the nonlinearities are a function of material and construction. Therefore, given the same operating conditions, a device's repeatability will be better than its absolute accuracy. Therefore, if it was correctly linearized, the system accuracy can be greater than the feedback device accuracy-the penalty being additional processing time for the signal correction and the requirement to linearize the system.

Although the digital system has many advantages, a new parameter must be considered when designing the overall system By virtue of being digital, the system design has changed from a continuous format to a sampled data design. A new and important variable is the processing time the computer requires to evaluate all the inputs and feedback, make calculations for the gains and compensations, and output a new signal for the force amplifier. This calculation time is generally called servo loop update time and its importance is dependent on the desired system response time.

If the system response time is long, the servo update time is not critical, because the updates occur so frequently the system behaves like a continuous system. Conversely, if the system response is extremely short, then the servo loop update time is very important. In these cases, the response speed of the feedback device is critical. When the control loop reads the required inputs to perform the calculations, it is important that the feedback transducers have the correct information precisely at that time. Any information delay will mean loop calculations are being performed on less-than-current information. This can cause a decrease in the system response and possible instability. All of these parameters are important in the implementation of feedback loop designs.

Despite the progress made in developing control systems for motors, control systems for electromagnetic brakes and clutches are unsatisfactory. This has created a problem with the design and manufacture of robots. A typical robot arm moves under the control of a motor. When current to the motor stops, the arm continues to move until a brake is applied. Such brakes and/or clutches are typically either fully on or fully off. However, if a robot arm is stopped with a brake, the momentum of the arm may cause the arm to snap or break a joint.

When designing closed loop control systems, the parameters of the controller, amplifier, and motor are critical for meeting the system's specifications. The theoretical analysis and simulation of the control system is also an important step in system design. But when the system is built with hardware, the selection of the feedback loop's parameters is an equally critical design decision, if not more so. I have found that these parameters may also be applied to electromagnetic brakes and clutches.

DE 3 801 647 A1 (Licentia) discloses a method and device for testing an all wheel drive assembly. An engine is connected on a test stand, through gearing arrangements and a transmission, to four direct-current machines simulating wheel loads. A feedback mechanism, involving torque output and wheel speed input, is connected to the engine, and factors such as cornering, wheel slip, gear position, etc. are fed into a simulator which controls the relationship between the torque output and the wheel speed input.

### SUMMARY OF THE INVENTION

The present invention is directed to a closed loop control system for a friction drive such as a clutch or brake, the system allowing an electromagnetic clutch or brake to vary its torque based on user-specified parameters such as torque, acceleration, velocity, position or any combination thereof. This system can also be used as an anti-slip or anti-lock controller. The system may be configured for use with a power-on or power-off clutch or brake.

Instead of applying error information gathered from the previous cycle, the control system described here works within each cycle, constantly measuring and correcting itself so that, for example, deceleration rate of a robot arm with varying inertia is held constant, minimizing damage to the robot.

The control concept is based on the fact that, during normal operation, the torque provided by a friction clutch or brake is proportional to the force applied to the friction faces. In a power-on device, the torque is proportional to the current flowing through the field. In a power-off device, the force provided by a spring or permanent magnet determines the torque.

Heretofore, clutches and brakes have been used only as on-off or start-stop devices. However, varying levels of torque can be achieved by varying the current running through the field to these devices and thus make it possible to dynamically adjust current, and consequently torque, during the start or stop cycle. In order to adjust this current effectively, a closed loop control system is required. By dynamically adjusting the current, the applied torque can be modulated to reduce breakage of parts due to inertia and momentum.

In one aspect of the subject invention, there is provided a control system for an electromagnetic friction device, the system including an amplifier having a feedback input proportional to a motor characteristic. The amplifier may be adjusted based on the input proportional to the motor characteristic to generate an output signal which is coupled to the electromagnetic friction device for applying a stopping torque in accordance with the output signal of the amplifier.

The motor characteristic may include a desired torque and torque error input, and teh output signal may be proportional to the difference between the two inputs, and the control system may further include a transducer coupled between the electromagnetic friction device and the error input of the amplifier for generating the error signal proportional to the torque applied to the electromagnetic friction device.

The transducer may be either an analogue device or a digital device.

A microprocessor device may be used to generate the output signal.

Analogue components may be used to generate the output signal.

The output signal may be pulse-width modulated.

The reference input may be supplied and controlled through an external device.

The electromagnetic friction device may be enabled and disabled through an external device.

The output signal, error signal, and reference input may be connected to an external display.

The control system may be arranged to monitor performance characteristic of an electric motor and to regulate a current provided to said motor as it monitors and controls the electromagnetic friction device.

The control system may further include a velocity transducer for generating a velocity error signal proportional to the velocity of the electromagnetic friction device, and means for connecting the velocity error signal to the amplifier.

The control system may further include a position transducer for generating a position error signal proportional to the position of the electromagnetic friction device, and means for connecting the position error signal to the amplifer.

The motor characteristic may include a current driving a load on the motor, and the amplifier adjustment may include generating an output current equal to or greater than the motor driving current, said electromagnetic friction device receiving the output current of the amplifier and applying a driving or stopping torque to the motor.

In a second aspect of the subject invention, there is provided a method of controlling an electromagnetic friction device, the method including steps of: generating a first signal proportional to a motor characteristic; delivering the first signal to an amplifier; generating an output current based at least in part on the first signal; and, sending the output current to the electromagnetic friction device.

Preferably: the first signal includes an error signal from a transducer; the motor characteristic includes a torque applied to the electromagnetic friction device; the step of delivering the first signal to the amplifier includes providing a reference signal and the error signal to the amplifier; the step of generating an output current includes comparing the error signal to the reference signal, the output current being proportional to the difference between the error signal and the reference signal; and, the step of sending the output current to the electromagnetic friction device includes applying the output current to the electromagnetic friction device. More preferably, the reference signal is scaled to assure compatibility with input requirements.

The method may include the steps of: generating a velocity error signal proportional to the velocity of the electro-magnetic friction device; and, delivering the velocity error signal to the amplifier.

The method may include the steps of: generating a position error signal proportional to the position of the electromagnetic friction device; and, delivering the position error signal to the amplifier.

Preferably: the first signal includes a feedback signal, and the motor characteristic includes a motor driving current; the step of generating the output current based at least in part on the first signal includes generating the output current greater than or equal to the motor driving current; and, the method further includes the step of applying a driving or stopping torque to the motor.

### BRIEF DESCRIPTION OF THE DRAWINGS

Figure 1 is a schematic of a conventional single loop motor torque control system.
Figure 2 is a schematic of a conventional three-loop motor control system.
Figure 3 is a schematic of a multiple loop brake control system.
Figures 4 and 5a are schematics of a power-on control system.
Figure 5b is a detailed schematic of a power-off control system.
Figure 6 is a block diagram illustrating the power-on control system of Figure 4.
Figure 7 is a block diagram illustrating the power-on and power-off control systems of Figures 5a and 5b.

### DETAILED DESCRIPTION OF INVENTION

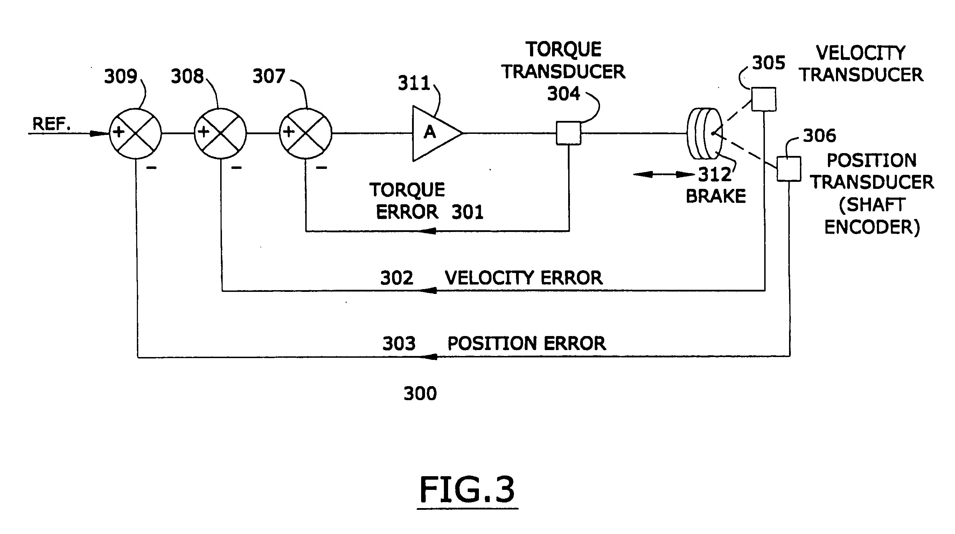

**Figure 3** is a generic functional diagram of a multiple-loop closed-loop control system for a brake or a clutch **300**. Process variables (torque **301,** velocity **302,** and position **303**) are read via sensors **304, 305,** and **306** respectively, conditioned and corrected, then sent to a closed loop amplifier **307, 308**, and **309** which compares its reading to a user specified reference. The difference between the process variable and reference signal generates a current command **310**, which is fed to a closed loop current control **311**. The current control system tightly controls the current flow through the clutch or brake **312**. The torque generated by the clutch or brake running at the controlled current affects the process variable, and the process begins again. Those skilled in the art understand that a digital controller may be substituted for the amplifier. In that case, the feedback signal is digitized by conventional analog-to-digital converters for processing by the digital controller.

The control scheme for a power on device differs from the scheme used for a power off device. In a power on device the system increases the field current to increase the torque of the device. A power off device works in reverse of this. As the field current is increased, the spring force is counteracted by magnetic force, lowering the force and available torque. Different circuitry has been developed to accommodate the two different methods of operation.

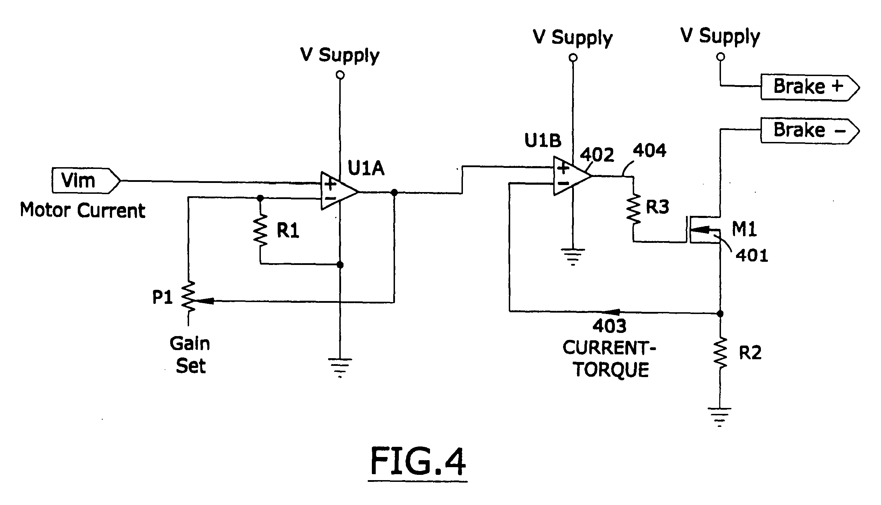

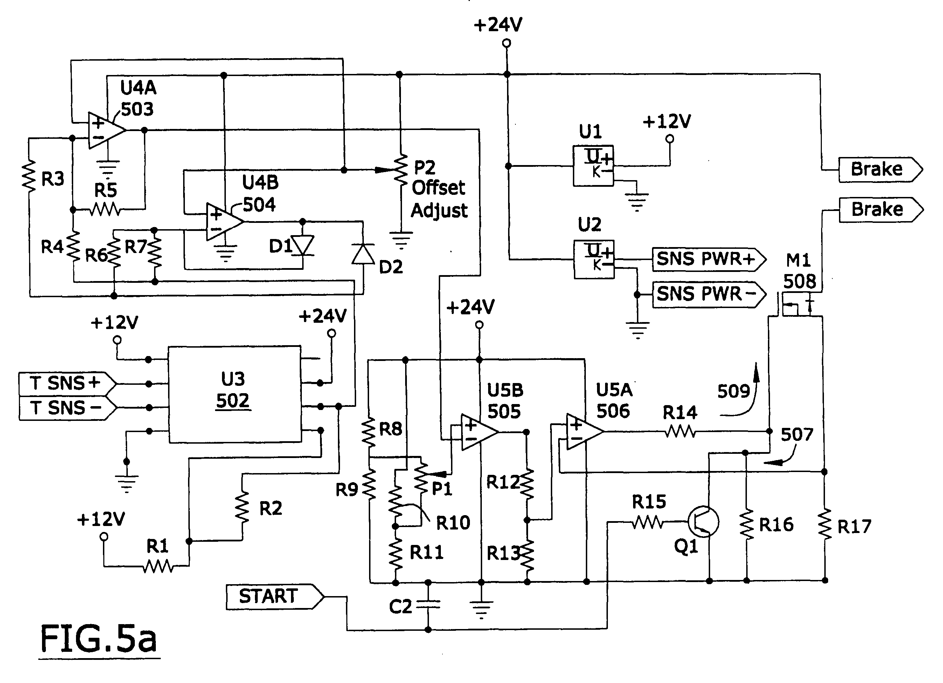

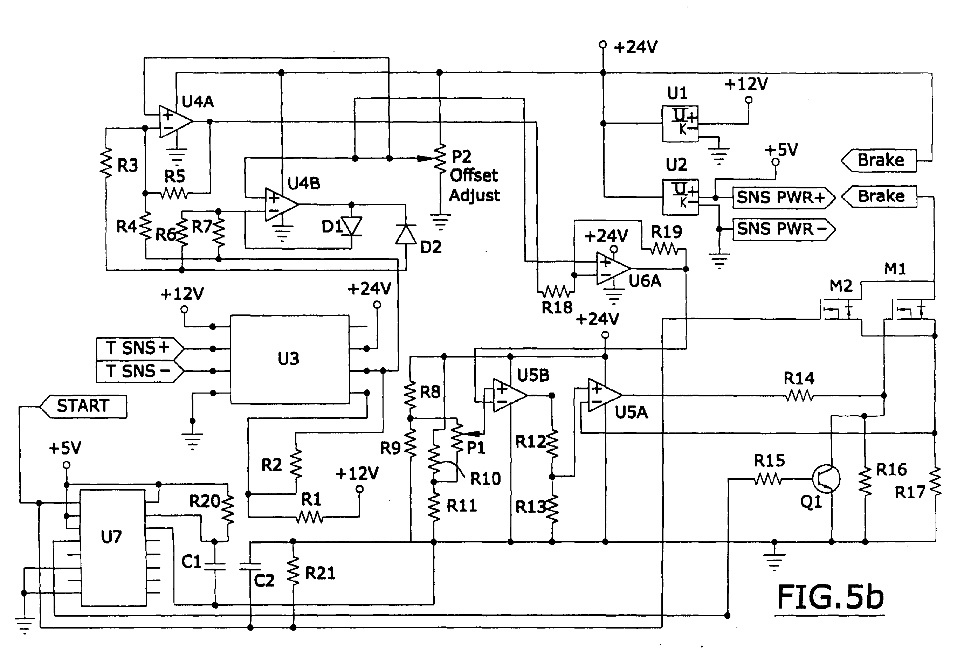

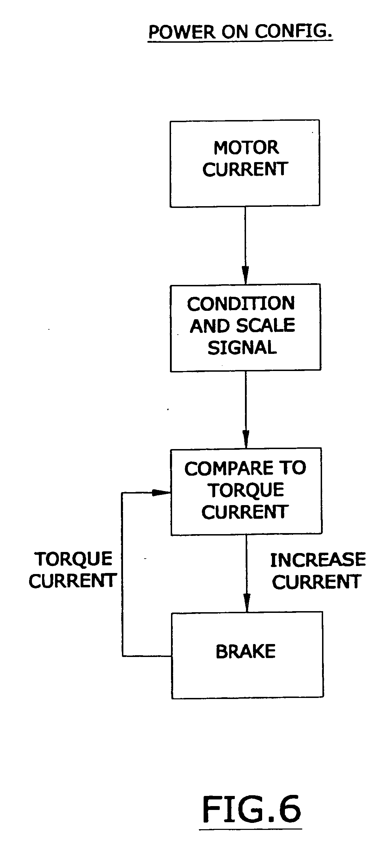

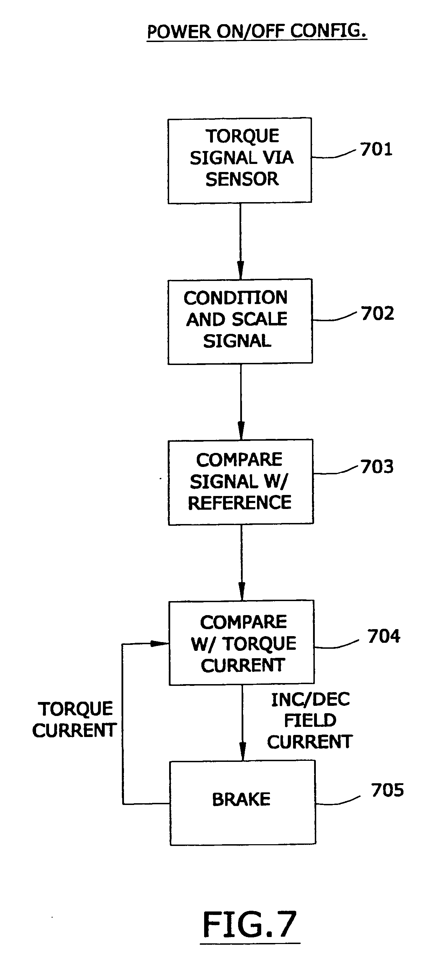

Figure **4** shows a clutch torque tracking controller **400**. The clutch torque tracking controller as shown uses motor torque as its initial signal. The current from power FET M1 **401** is proportional to the motor torque. For this and all other embodiments of the invention, an output signal will be considered *proportional to* an input signal, after the input signal has been amplified, scaled, conditioned, and/or compared to the reference signal. The amplifier U1B **402** takes a feedback current signal **403** and amplifies it to generate an output current 404 that is at least counteracts the motor torque. A block diagram illustrating this process is provided in Figure **6**. Figures **5a** and **5b** are detailed schematics of power-on and power-off control systems. While the methods of energizing and de-energizing the brake differ, the process for monitoring the torque and regulating the output current is the same. As the schematics of figure **5a** illustrates, a sensor **501** used to read a specific variable. That variable can be torque, position, or velocity. The output of that sensor is then fed to a differential amplifier **502,** where the signal is adjusted and sent a series of operational amplifiers **503** and **504**. It is through this process that the signal is conditioned, scaled and adjusted. The resulting signal is then compared to a reference input at amplifier labeled **505**. Finally, that signal is sent to an amplifier **506** which also receives the actual feedback current **507** generated from power FET **508.** The amplifier then generates an output current **509** that counteracts motor torque. Figure **7** is a simplistic block diagram illustrating the power-on and power- off control systems of Figures **5a** and **5b.** In this process, a torque signal is generated via a transducer **701**. That torque signal is conditioned, scaled **702**, and compared with a reference signal **703**. The resulting signal is then compared with the torque current **704**, and the resulting current to the brake **705** is increased or decreased. In the preferred embodiment the amplifier generates a torque signal greater than the motor torque signal, e.g., 110% of the motor torque signal. By tracking the motor torque, the controller avoids the abrupt application of excessive braking torque to the system. Instead it applies a torque that is greater than the driving torque but not so great as to generate inertial damage to the real world components. This feature is especially useful during low torque loads. If the full braking power of the brake is applied when there is a light torque on the motor, the abrupt deceleration of the elements moved by the motor may cause one or more joints to be stressed or damaged. Thus a control system is provided allowing soft starts or soft stops as may be required or desired.
The system is also capable of operating around any process variable that can be affected by the clutch or brake being controlled, such as torque, speed, encoder/resolver output, etc. In torque mode, the torque signal is measured and controlled directly. In speed mode, the speed signal is manipulated by the system to control acceleration (time to speed, time to zero speed). Digital signals such as encoder inputs can be used in the same way with additional computation. Each control signal mode is manipulated before it is passed to the control portion of the circuit depending upon the nature of the control mode and the desired performance of the automated device.

In addition to the ability to set and control a clutch or brake with a single value that is entered by the user, this system is capable of outputting a time varying profile. This means that the device can be programmed to vary the control setting over time. For example, a programmed soft start could command a clutch to start with low torque, then build its torque as speed increases, minimizing shock to other components in the power transmission system. The same could be done with a brake in programmed soft stop mode. The profile can be altered to optimize system response. Furthermore, in addition to controlling the clutch or brake, the system can simultaneously monitor performance characteristics of an electric motor, and vary the current provided to the motor as it maintains and controls the clutch or brake.

Possible applications for this control are business machines where paper must be moved precisely, industrial automation products where high rates of acceleration could damage components, tension control devices, overload protection, and programmable bidirectional one way clutches,

A power on brake was tested to determine the feasible range of control that could be achieved. The device tested was a 1.75" power on brake (Deltran model BF-17). The test setup consisted of a servo motor with a large additional flywheel, a torque transducer (used for feedback) and the brake driven by the control circuit. The motor was accelerated to 3000 RPM, and then disabled. The brake was then engaged to stop the load from this speed while dynamic torque and speed were measured. The results showed that the brake torque could be reliably varied from 5 to 27 lb-in, and the time to zero speed could be varied from 1.4 to .3 seconds by setting the desired torque level by adjusting a single potentiometer.

There are a number of enhancements planned to make programming and operation of the control system simpler and more accurate. Most notably, a programmable front end will be added so that the user can plug a computer into the control, tune the clutch or brake and upload a control program to it via a serial port. The system shown and described above may be implemented with discrete components in an analog circuit or in a digital system using a microprocessor, memory and program. When used in robotic designs, the controllers of the present invention allow greater control of such robots, allowing smoother operations through the incorporation of soft starts and soft stops in robotic movement that can be adjusted per operational requirements.

## Claims

1. A control system for an electromagnetic friction device, the system being **characterized by** comprising:
an amplifier (103) having a feedback input proportional to a motor characteristic;
wherein the amplifier may be adjusted based on the input proportional to the motor characteristic to generate an output signal which is coupled to the electromagnetic friction device for applying a stopping torque (106) in accordance with the output signal of the amplifier.

2. The control system of claim 1, wherein:
the motor characteristic comprises a desired torque input (REF) and torque error input (107);
the output signal (105) is proportional to the difference between the two inputs; and,
the control system further comprises a transducer (101) coupled between the electromagnetic friction device and the error input of the amplifier for generating the error signal proportional to the torque (106) applied to the electromagnetic friction device.

3. The control system of claim 2, wherein said transducer (101) is an analogue device.

4. The control system of claim 2, wherein said transducer (101) is a digital device.

5. The control system according to any preceding claim, wherein a microprocessor device is used to generate said output signal.

6. The control system according to any of claims 1 to 4, wherein analogue components are used to generate said output signal.

7. The control system according to any preceding claim, wherein the output signal is pulse-width modulated.

8. The control system according to any of claims 2 to 7, wherein said reference input (REF) is supplied and controlled through an external device.

9. The control system according to any preceding claim, wherein said electromagnetic friction device is enabled and disabled through an external device.

10. The control system according to any preceding claim, wherein said output signal, said error signal (107), and said reference input (REF) are connected to an external display.

11. The control system according to any preceding claim, wherein said control system is arranged to monitor performance characteristic of an electric motor (104) and to regulate a current provided to said motor as it monitors and controls the electromagnetic friction device.

12. The control system according to any preceding claim, comprising:
a velocity transducer (201) for generating a velocity error signal (205) proportional to the velocity of the electromagnetic friction device; and,
means (203) for connecting the velocity error signal to the amplifier (103).

13. The control system according to claim 12, comprising:
a position transducer (202) for generating a position error signal (206) proportional to the position of the electromagnetic friction device; and,
means (204) for connecting the position error signal to the amplifier (103).

14. The control system of claim 1, wherein:
the motor characteristic comprises a current driving a load on the motor (104); and,
the amplifier adjustment comprises generating an output current equal to or greater than the motor driving current, said electromagnetic friction device receiving the output current of the amplifier (103) and applying a driving or stopping torque (106) to the motor.

15. A method of controlling an electromagnetic friction device, the method being **characterized by** comprising the steps of:
generating a first signal proportional to a motor characteristic;
delivering the first signal to an amplifier (103);
generating an output current based at least in part on the first signal; and,
sending the output current to the electromagnetic friction device.

16. The method according to claim 15, wherein:
the first signal comprises an error signal (107) from a transducer (141); and,
the motor characteristic comprises a torque (106) applied to the electromagnetic friction device;
and wherein:
the step of delivering the first signal to the amplifier (103) comprises providing a reference signal (REF) and said error signal to the amplifier;
the step of generating an output current comprises comparing said error signal to said reference signal, the output current being proportional to the difference between said error signal and said reference signal; and,
the step of sending the output current to the electromagnetic friction device comprises applying said output current to said electromagnetic friction device.

17. The method according to claim 16, wherein said reference signal (REF) is scaled to assure compatibility with input requirements.

18. The method according to claim 16 or 17, including the steps of:
generating a velocity error signal (205) proportional to the velocity of said electromagnetic friction device; and,
delivering said velocity error signal to said amplifier (103).

19. The method according to any of claims 16 to 18, including the steps of:
generating a position error signal (206) proportional to the position of said electromagnetic friction device; and,
delivering said position error signal to said amplifier (103).

20. The method according to claim 15, wherein:
the first signal comprises a feedback signal; and,
the motor characteristic comprises a motor driving current;
and wherein:
the step of generating the output current based at least in part on the first signal comprises generating the output current greater than or equal to said motor driving current; and,
and wherein:
the method further comprises the step of applying a driving or stopping torque to the motor (104).

## Patentansprüche

1. Steuersystem für eine elektromagnetische Reibungsvorrichtung, wobei das System **gekennzeichnet ist durch**:
einen Verstärker (103) mit einem Rückkopplungseingang, der proportional zu einer Motoreigenschaft ist;
wobei der Verstärker basierend auf dem Eingang, der proportional zu der Motoreigenschaft ist, einstellbar ausgebildet ist, um ein Ausgangssignal zu erzeugen, das an die elektromagnetische Reibungsvorrichtung gekoppelt wird, um ein Stop-Drehmoment (106) gemäß dem Ausgangssignal des Verstärkers anzulegen.

2. Steuersystem nach Anspruch 1, wobei:
die Motoreigenschaft einen gewünschten Drehmomenteingang (REF) und Drehmoment-Fehlereingang (107) umfasst;
das Ausgangssignal (105) proportional zu dem Unterschied zwischen den beiden Eingängen ist; und
das Steuersystem des Weiteren einen Umwandler (101) aufweist, der zwischen die elektromagnetische Reibungsvorrichtung und den Fehlereingang des Verstärkers geschaltet ist, um das Fehlersignal proportional zu dem an die elektromagnetische Reibungsvorrichtung angelegten Drehmoment (106) zu erzeugen.

3. Steuersystem nach Anspruch 2, wobei der Wandler (101) eine analoge Vorrichtung ist.

4. Steuersystem nach Anspruch 2, wobei der Wandler (101) eine digitale Vorrichtung ist.

5. Steuervorrichtung nach einem der vorhergehenden Ansprüche, wobei eine Mikroprozessorvorrichtung verwendet wird, um das Ausgangssignal zu erzeugen.

6. Steuersystem nach einem der Ansprüche 1 bis 4, wobei analoge Komponenten verwendet werden, um das Ausgangssignal zu erzeugen.

7. Steuersystem nach einem der vorhergehenden Ansprüche, wobei das Ausgangssignal pulsbreitenmoduliert ist.

8. Steuersystem nach einem der Ansprüche 2 bis 7, wobei der Referenzeingang (REF) durch eine externe Vorrichtung zugeführt und gesteuert wird.

9. Steuersystem nach einem der vorhergehenden Ansprüche, wobei die elektromagnetische Reibungsvorrichtung durch eine externe Vorrichtung aktiviert und deaktiviert wird.

10. Steuersystem nach einem der vorhergehenden Ansprüche, wobei das Ausgangssignal, das Fehlersignal (107) und der Referenzeingang (REF) mit einer externen Anzeige verbunden sind.

11. Steuersystem nach einem der vorhergehenden Ansprüche, wobei das Steuersystem so ausgelegt ist, dass es Leistungseigenschaften eines Elektromotors (104) überwacht und den Strom regelt, der dem Motor zugeführt wird, während er die elektromagnetische Reibungsvorrichtung überwacht und steuert.

12. Steuersystem nach einem der vorhergehenden Ansprüche, mit:
einem Geschwindigkeitswandler (201) zum Erzeugen eines Geschwindigkeits-Fehlersignals (205) proportional zu der Geschwindigkeit der elektromagnetischen Reibungsvorrichtung; und
einer Einrichtung (203) zum Verbinden des Geschwindigkeits-Fehlersignals mit dem Verstärker (103).

13. Steuersystem nach Anspruch 12, mit:
einem Positionswandler (202) zum Erzeugen eines Positions-Fehlersignals (206) proportional zu der Position der elektromagnetischen Reibungsvorrichtung; und
einer Einrichtung (204) zum Verbinden des Positions-Fehlersignals mit dem Verstärker (103).

14. Steuersystem nach Anspruch 1, wobei:
die Motoreigenschaft einen Strom umfasst, der eine Last auf dem Motor (104) antreibt; und
die Verstärkereinstellung das Erzeugen eines Ausgangsstroms umfasst, der gleich oder größer ist als der Motorantriebsstrom, wobei die elektromagnetische Reibungsvorrichtung den Ausgangsstrom des Verstärkers (103) empfängt und an den Motor ein Antriebs- oder Stop-Drehmoment (106) anlegt.

15. Verfahren zum Steuern einer elektromagnetischen Reibungsvorrichtung, wobei das Verfahren durch die folgenden Schritte **gekennzeichnet** ist:
Erzeugen eines ersten Signals proportional zu einer Motoreigenschaft; Zuführen des ersten Signals zu einem Verstärker (103);
Erzeugen eines Ausgangsstroms, der wenigstens teilweise auf dem ersten Signal basiert; und
Senden des Ausgangsstroms an die elektromagnetische Reibungsvorrichtung.

16. Verfahren nach Anspruch 15, wobei:
das erste Signal ein Fehlersignal (107) von einem Wandler (101) aufweist; und
die Motoreigenschaft ein Drehmoment (106) umfasst, das an die elektromagnetische Reibungsvorrichtung angelegt wird;
und wobei:
der Schritt des Zuführens des ersten Signals zu dem Verstärker (103) das Bereitstellen eines Referenzsignals (REF) und des Fehlersignals für den Verstärker umfasst;
der Schritt des Erzeugens eines Ausgangsstroms das Vergleichen des Fehlersignals mit dem Referenzsignal umfasst, wobei der Ausgangsstrom proportional zu dem Unterschied zwischen dem Fehlersignal und dem Referenzsignal ist; und
der Schritt des Sendens des Ausgangsstroms an die elektromagnetische Reibungsvorrichtung das Anlegen des Ausgangsstroms an die elektromagnetische Reibungsvorrichtung umfasst.

17. Verfahren nach Anspruch 16, wobei das Referenzsignal (REF) so skaliert wird, dass es Kompatibilität mit Eingangsanforderungen sicherstellt.

18. Verfahren nach Anspruch 16 oder 17, das die folgenden Schritte umfasst:
Erzeugen eines Geschwindigkeits-Fehlersignals (205) proportional zu der Geschwindigkeit der elektromagnetischen Reibungsvorrichtung; und
Zuführen des Geschwindigkeits-Fehlersignals zu dem Verstärker (103).

19. Verfahren nach einem der Ansprüche 16 bis 18, das die folgenden Schritte umfasst:
Erzeugen eines Positions-Fehlersignals (206) proportional zu der Position der elektromagnetischen Reibungsvorrichtung; und
Zuführen des Positions-Fehlersignals zu dem Verstärker (103).

20. Verfahren nach Anspruch 15, wobei:
das erste Signal ein Rückkopplungssignal aufweist; und
die Motoreigenschaft einen Motorantriebsstrom umfasst;
und wobei:
der Schritt des Erzeugens des Ausgangsstroms, der wenigstens teilweise auf dem ersten Signal basiert, das Erzeugen eines Ausgangsstroms umfasst, der größer oder gleich dem Motorantriebsstrom ist;
und wobei:
das Verfahren des Weiteren den Schritt des Anlegens eines Antriebs- oder Stop-Drehmoments an den Motor (104) umfasst.

## Revendications

1. Système de commande destiné à un dispositif de frottement électromagnétique, le système étant **caractérisé en ce qu'**il comprend :
un amplificateur (103) ayant une entrée de retour proportionnelle à une caractéristique de moteur ;
dans lequel l'amplificateur peut être ajusté sur la base de l'entrée proportionnelle à la caractéristique de moteur afin de générer un signal de sortie qui est couplé au dispositif de frottement électromagnétique de façon à appliquer un couple d'arrêt (106) selon le signal de sortie de l'amplificateur.

2. Système de commande selon la revendication 1, dans lequel :
la caractéristique de moteur comprend une entrée de couple souhaitée (REF) et une entrée d'erreur de couple (107) ;
le signal de sortie (105) est proportionnel à la différence entre les deux entrées ; et
le système de commande comprend en outre un transducteur (101) couplé entre le dispositif de frottement électromagnétique et l'entrée d'erreur de l'amplificateur afin de générer le signal d'erreur proportionnel au couple (106) appliqué au dispositif de frottement électromagnétique.

3. Système de commande selon la revendication 2, dans lequel ledit transducteur (101) est un dispositif analogique.

4. Système de commande selon la revendication 2, dans lequel ledit transducteur (101) est un dispositif numérique.

5. Système de commande selon l'une quelconque des revendications précédentes, dans lequel un microprocesseur est utilisé afin de générer ledit signal de sortie.

6. Système de commande selon l'une quelconque des revendications 1 à 4, dans lequel des composants analogiques sont utilisés afin de générer ledit signal de sortie.

7. Système de commande selon l'une quelconque des revendications précédentes, dans lequel le signal de sortie est modulé en durée d'impulsion.

8. Système de commande selon l'une quelconque des revendications 2 à 7, dans lequel ladite entrée de référence (REF) est fournie et contrôlée par le biais d'un dispositif externe.

9. Système de commande selon l'une quelconque des revendications précédentes, dans lequel ledit dispositif de frottement électromagnétique est activé et désactivé par le biais d'un dispositif externe.

10. Système de commande selon l'une quelconque des revendications précédentes, dans lequel ledit signal de sortie, ledit signal d'erreur (107) et ladite entrée de référence (REF) sont reliés à un afficheur externe.

11. Système de commande selon l'une quelconque des revendications précédentes, dans lequel ledit système de commande est agencé afin de surveiller une caractéristique de performances d'un moteur électrique (104) et de réguler un courant fourni audit moteur lorsqu'il surveille et contrôle le dispositif de frottement électromagnétique.

12. Système de commande selon l'une quelconque des revendications précédentes, comprenant :
un transducteur de vitesse (201) destiné à générer un signal d'erreur de vitesse (205) proportionnel à la vitesse du dispositif de frottement électromagnétique ; et
un moyen (203) destiné à relier le signal d'erreur de vitesse à l'amplificateur (103).

13. Système de commande selon la revendication 12, comprenant :
un transducteur de position (202) destiné à générer un signal d'erreur de position (206) proportionnel à la position du dispositif de frottement électromagnétique ; et
un moyen (204) destiné à relier le signal d'erreur de position à l'amplificateur (103).

14. Système de commande selon la revendication 1, dans lequel :
la caractéristique de moteur comprend un courant entraînant une charge sur le moteur (104) ; et
l'ajustement d'amplificateur comprend la génération d'un courant de sortie égal ou supérieur au courant d'entraînement du moteur, ledit dispositif de frottement électromagnétique recevant le courant de sortie de l'amplificateur (103) et appliquant un couple d'entraînement ou d'arrêt (106) au moteur.

15. Procédé de commande d'un dispositif de frottement électromagnétique, le procédé étant **caractérisé en ce qu'**il comprend les étapes consistant à :
générer un premier signal proportionnel à une caractéristique de moteur ;
délivrer le premier signal à un amplificateur (103) ;
générer un courant de sortie sur la base d'au moins en partie le premier signal ; et
envoyer le courant de sortie au dispositif de frottement électromagnétique.

16. Procédé selon la revendication 15, dans lequel :
le premier signal comprend un signal d'erreur (107) provenant d'un transducteur (101) ; et
la caractéristique de moteur comprend un couple (106) appliqué au dispositif de frottement électromagnétique ;
et dans lequel :
l'étape de délivrance du premier signal à l'amplificateur (103) comprend le fait de fournir un signal de référence (REF) et ledit signal d'erreur à l'amplificateur ;
l'étape de génération d'un courant de sortie comprend la comparaison dudit signal d'erreur avec ledit signal de référence, le courant de sortie étant proportionnel à la différence entre ledit signal d'erreur et ledit signal de référence ; et
l'étape d'envoi du courant de sortie au dispositif de frottement électromagnétique comprend l'application dudit courant de sortie audit dispositif de frottement électromagnétique.

17. Procédé selon la revendication 16, dans lequel ledit signal de référence (REF) est dimensionné afin d'assurer une compatibilité avec les exigences d'entrée.

18. Procédé selon la revendication 16 ou 17, comprenant les étapes consistant à :
générer un signal d'erreur de vitesse (205) proportionnel à la vitesse dudit dispositif de frottement électromagnétique ; et
délivrer ledit signal d'erreur de vitesse audit amplificateur (103).

19. Procédé selon l'une quelconque des revendications 16 à 18, comprenant les étapes consistant à :
générer un signal d'erreur de position (206) proportionnel à la position dudit dispositif de frottement électromagnétique ; et
délivrer ledit signal d'erreur de position audit amplificateur (103).

20. Procédé selon la revendication 15, dans lequel :
le premier signal comprend un signal de retour ; et
la caractéristique de moteur comprend un courant d'entraînement du moteur ;
et dans lequel :
l'étape de génération du courant de sortie sur la base d'au moins en partie le premier signal comprend la génération du courant de sortie supérieur ou égal audit courant d'entraînement du moteur ;
et dans lequel :
le procédé comprend en outre l'étape d'application d'un couple d'entraînement ou d'arrêt au moteur (104).
